# EUROPEAN PATENT SPECIFICATION

(11) **EP 4 141 389 B1**
(45) Date of publication and mention of the grant of the patent: **19.02.2025**
(21) Application number: 21192861.9
(22) Date of filing: 24.08.2021
(51) Int. Cl.: G01D 11/18, G01D 5/244, G01D 11/24

(54) **ROTARY ENCODER AND METHOD FOR ASSEMBLING A ROTARY ENCODER**
DREHGEBER UND VERFAHREN ZUR MONTAGE EINES DREHGEBERS
ENCODEUR ROTATIF ET PROCÉDÉ D'ASSEMBLAGE D'UN ENCODEUR ROTATIF

(43) Date of publication of application: 01.03.2023
(73) Proprietor: LEINE & LINDE AB, 645 21 Strängnäs (SE)
(72) Inventor: ARNSTEIN, Richard, 645 91 Strängnäs (SE)
(74) Representative: Zacco Sweden AB

(56) References cited:
- DE-B4- 102004 027 348
- DE-C5- 102012 023 679
- US-A1- 2004 079 177
- US-A1- 2012 188 534

## Description

### TECHNICAL FIELD

The present invention relates to a method for assembling a rotary encoder, the rotary encoder comprising a rotor and a shaft having a bearing configuration. The invention relates also to a rotary encoder being assembled according to the proposed method.

### BACKGROUND ART

Rotary encoders are used in industry for position and speed monitoring and are typically mounted on a shaft of a motor or a gearbox of an assembly. Rotary encoders may be equipped with a rotor unit and a stator unit for detecting operational parameters of the shaft of the assembly.

Today rotary encoders may be assembled in such a way that a package comprising bearings mounted on a shaft is fixated within a bearing housing by means of an adhesive, such as e.g. glue. Assembling of the rotary encoder accordingly is however rather complicated because it is difficult to secure a stable gluing process. Hereby various problems may arise during the entire rotary encoder life time. Another drawback of this assembling process is that it is very time consuming. Usually it takes many hours for the glue to cure, which causes the production cost of the rotary encoder higher than necessary.

DE 10 2012 023679 C5 concerns a housing for a bearing of a rotary encoder.

### SUMMARY OF THE INVENTION

An object of the present disclosure is to provide a rotary encoder, which seeks to mitigate, alleviate, or eliminate one or more of the above-identified deficiencies in the art and disadvantages singly or in any combination.

An object of the present invention is to propose a novel and advantageous method for assembling a rotary encoder.

An object of the present invention is to propose a time-effective assembling process of a rotary encoder.

Another object of the invention is to propose a novel and advantageous rotary encoder.

Yet another object of the invention is to propose an alternative method for assembling a rotary encoder, an alternative rotary encoder.

Some of these objects are achieved with a rotary encoder according to claim 1. Other objects are achieved with a method for assembling a rotary encoder in accordance with what is depicted herein. Advantageous embodiments are depicted in the dependent claims. Substantially the same advantages of method steps of the proposed method hold true for corresponding means of the proposed rotary encoder.

According to one example there is provided a rotary encoder comprising a bearing configuration, a bearing housing and a stator, the bearing configuration comprises a shaft, a number of bearing units and a rotor, wherein the bearing housing is arranged to receive the bearing configuration internally when the bearing housing is in a deformed state, in which deformed state insertion and positioning of the bearing configuration is possible due to an increased internal diameter of the bearing housing, and wherein the bearing housing is arranged to fixedly secure the received bearing configuration in a pre-stressed state in a non-deformed state.

The deformed state of the rotary encoder is achieved by applying external forces according to what is depicted herein. After insertion of the bearing configuration into the bearing housing the applied forces are removed and the bearing housing hereby is fixedly securing the received bearing configuration in a pre-stressed state in the non-deformed state. Hereby a time effective assembling process of the rotary encoder is achieved. Mounting of the rotary encoder may be performed within minutes instead of several hours which often is the case when using the assembly process involving provision of an adhesive.

Hereby a simplified assembling process is provided. A machine may be used for affecting the bearing housing so as to allow insertion of the bearing configuration and affecting the bearing housing so that the bearing configuration is fixated in a pre-stressed state. Hereby a relative cost-effective and accurate method for assembling the rotary encoder.

Advantageously bearing units of the bearing configuration are secured in a pre-stressed state before or during assembling of the rotary encoder. The bearing units of the bearing configuration are after have being assembled according to the proposed method depicted herein arranged in a pre-stressed state in an axial direction of the rotary encoder. The bearing units of the bearing configuration are after have being assembled according to the proposed method depicted herein also arranged in a pre-stressed state in an radial direction of the shaft of the rotary encoder. Hereby the bearing units are not fit loosely. Hereby the bearing units are not loosely arranged in the rotary encoder.

Advantageously a rotary encoder which has been assembled according to the herein proposed method presents an increased lifetime of operation.

One advantage of providing the bearing units in such a pre-stressed state, thus not being loosely fit, is that an improved accuracy regarding detection of operational parameters by means of the rotary encoder is achieved.

The rotary encoder may further comprise a spring member, which is arranged to the shaft between a first bearing unit and a second bearing unit so as to provide a pre-stressed state of the first bearing unit and the second bearing unit in an axial direction.

The rotary encoder may comprise at least one rib arranged internally of the bearing housing, wherein the at least one rib is arranged to fixedly secure the received bearing configuration. Advantageously a plurality of ribs are provided for improved balance during operation.

The bearing housing may be arranged to be affected by respective pushing forces in a direction radially inwards, whereby the bearing housing is arranged to change to the deformed state, in which deformed state insertion of the bearing configuration into the bearing housing is possible. Insertion and positioning of the bearing configuration is possible when the bearing housing is in the deformed state.

Hereby the bearing housing is affected so that the internal diameter thereof is increased by applying a number of external forces to the bearing housing in a radial direction towards a centre of the bearing housing, and the bearing housing is affected so that the internal diameter thereof is reduced by removing said applied external forces.

The external forces for affecting the bearing housing may be applied with high precision and high accuracy. Hereby a reliable assembling process is achieved. The external forces may be applied in such a way that a minimum of tension is caused to the bearing housing but still allowing insertion of the bearing configuration into the bearing housing.

The rotary encoder may comprise at least one wall member arranged internally of the bearing housing, wherein the at least one wall member is arranged to fixedly secure the received bearing configuration. The at least one wall member is provided with a gripping means, which gripping means is arranged to be affected by respective pulling forces in a direction radially outwards, whereby the bearing housing is arranged to change to the deformed state, in which deformed state insertion of the bearing configuration into the bearing housing is possible. Insertion and positioning of the bearing configuration is possible when the bearing housing is in the deformed state.

Hereby the bearing housing is affected so that the internal diameter thereof is increased by applying a number of external forces to gripping means of the bearing housing in a radial direction outwards a centre of the bearing housing. The bearing housing is affected so that the internal diameter thereof is reduced by removing said applied external forces.

The external forces for affecting the bearing housing may be applied with high precision and high accuracy. Hereby a reliable assembling process is achieved. The external forces may be applied in such a way that a minimum of tension is caused to the bearing housing but still allowing insertion of the bearing configuration into the bearing housing.

According to one example the bearing housing has a cross section being in the shape of a polygon, and wherein at least one outside surface of the polygon is provided with a gripping means, which gripping means is arranged for being affected by respective pulling forces in a direction radially outwards, whereby the bearing housing is arranged to change to the deformed state, in which deformed state insertion of the bearing configuration into the bearing housing is possible. Insertion and positioning of the bearing configuration is possible when the bearing housing is in the deformed state.

The bearing housing is affected so that the internal diameter thereof is increased by applying a number of external forces to gripping means of the bearing housing in a radial direction outwards a centre of the bearing housing. The bearing housing is affected so that the internal diameter thereof is reduced by removing said applied external forces.

The external forces for affecting the bearing housing may be applied with high precision and high accuracy. Hereby a reliable assembling process is achieved. The external forces may be applied in such a way that a minimum of tension is caused to the bearing housing but still allowing insertion of the bearing configuration into the bearing housing.

According to an aspect of the invention there is provided an assembly comprising a rotary encoder according to the disclosure. The assembly may be any device, system, installation, machine, platform, configuration wherein the rotary encoder is applicable. The assembly may comprise any one of an electric motor, combustion engine and transmission shaft configuration.

According to an example there is provided method for assembling a rotary encoder, the rotary encoder comprising a bearing housing and a bearing configuration, the method comprising the steps of:
- affecting the bearing housing so that an internal diameter thereof is increased to an extent allowing insertion of the bearing configuration;
- inserting the bearing configuration into the bearing housing to a predetermined axial position; and
- affecting the bearing housing so that the internal diameter thereof is reduced so as to fixedly secure the bearing configuration in a pre-stressed state.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields.

### BRIEF DESCRIPTION OF THE DRAWINGS

For fuller understanding of embodiments of the present invention and its further objects and advantages, the detailed description set out below should be read in conjunction with the accompanying drawings, in which the same reference notations denote similar items in the various diagrams, and in which:
Figure 1 schematically illustrates an assembly according to an embodiment of the invention;
Figure 2a schematically illustrates an exploded view of a rotary encoder according to an embodiment of the invention;
Figure 2b schematically illustrates an exploded view of a rotary encoder according to an embodiment of the invention;
Figure 2c schematically illustrates a rotary encoder according to an embodiment of the invention;
Figure 3a schematically illustrates a bearing housing according to a first example;
Figure 3b schematically illustrates the bearing housing according to the first example;
Figure 3c schematically illustrates the bearing housing and a bearing configuration according to the first example;
Figure 3d schematically illustrates bearing housing and a bearing configuration according to the first example;
Figure 4a schematically illustrates bearing housing according to a second example;
Figure 4b schematically illustrates bearing housing according to the second example;
Figure 5a schematically illustrates bearing housing according to a third example;
Figure 5b schematically illustrates bearing housing according to the third example;
Figure 6a is a schematic flowchart of a method according to an embodiment of the invention;
Figure 6b is a schematic flowchart of a method according to an embodiment of the invention; and
Figure 7 schematically illustrates a computer.

### DETAILED DESCRIPTION

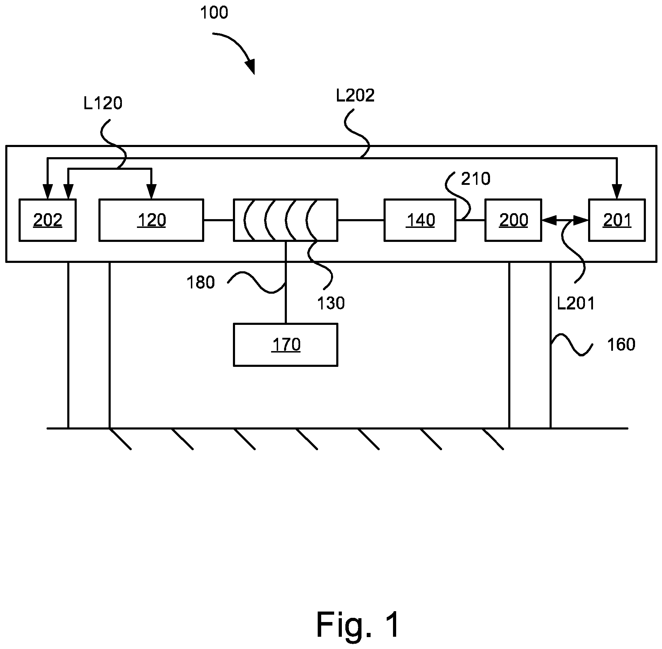

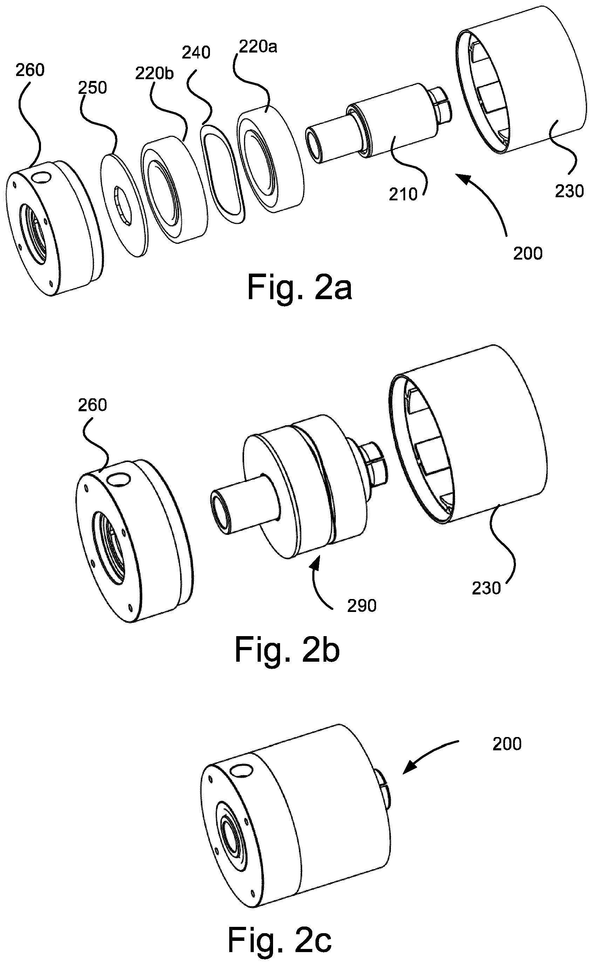

Figure 1 depicts a side view of an assembly 100. The exemplified assembly 100 is a crane for movement of various goods. The assembly 100 comprises a motor unit 120 being arranged to control operation of a cylinder unit 130 for holding a crane wire 180. The cylinder unit 130 may alternatively be denoted "drum". The crane wire 180 is adapted to detachably hold a load 170 at one end thereof. The crane may be provided with a number of support members 160. A first electronic control arrangement 201 is arranged for communication with a second electronic control arrangement 202 via a link L202. Alternatively, the first control arrangement 201 is arranged for communication directly with the motor unit 120. The second control arrangement 202 is arranged for communication with the motor unit 120 via a link L120. The first and/or second control arrangement may be arranged to control operation of the assembly 100, e.g. by controlling the motor unit 120. Hereby rotational/lateral movement of the cylinder unit 130 may be controlled and the load 170 may hereby be transported/positioned/moved, in vertical and lateral directions, according to operator commando signals. Alternatively, operation of the cylinder unit 130 may be performed automatically/autonomously by means of the second control arrangement 202. A shaft 210 of a rotary encoder 200 may be mechanically arranged via a clutch 140 to a shaft of the cylinder unit 130. The second control arrangement 202 may be arranged to control operation of the clutch 140. According to an example the shaft 210 of the rotary encoder 200 is mechanically arranged to the shaft of the cylinder unit 130 via a coupling means. The coupling means being arranged for connecting the shaft 210 of the rotary encoder 200 and an external shaft, such as the shaft of the cylinder unit 130, is depicted in greater detail with reference to Figure 2. The first control arrangement 201 is arranged for communication with the rotary encoder via a link L201. The rotary encoder 200 is arranged to determine operational parameters of the assembly 100. Said operational parameters may be e.g. cylinder unit shaft rotational speed and/or relative rotational positions of the cylinder unit shaft.

The rotary encoder disclosed herein may be applicable to paper mill systems and rolling mills. The rotary encoder disclosed herein may be applicable to elevator systems, oil rig systems and various machine tools. The rotary encoder may thus be applicable to a great variety of assemblies.

The proposed rotary encoder may be applicable to various assemblies comprising an engine/motor for rotating a shaft. The assembly may be a vehicle such as a mining machine, tractor, dumper, wheel-loader, forest machine, earth mover, road construction vehicle, road planner, emergency vehicle or a tracked vehicle. The proposed rotary encoder is according to one aspect of the disclosure well suited to other applications that comprise a rotary shaft than vehicles, e.g. watercraft. The watercraft may be of any kind, e.g. motorboats, steamers, ferries, ships or submarines.

The rotary encoder disclosed herein is applicable to various stationary assemblies/platforms comprising a rotating shaft, such as a windmill for generating electricity.

According to one example a number of rotary encoders 200 are provided to the assembly 100 for detecting operational parameters of various components/units/arrangements of the assembly 100. Said number of rotary encoders 200 may be 2, 3, 4, or larger.

The term "link" refers herein to a communication link which may be a physical connection such as a multicore cable, an opto-electronic communication line, or a non-physical connection such as a wireless connection, e.g. a radio link or microwave link.

The term "electronic control arrangement" is according to one embodiment herein defined as an arrangement comprising only one electronic control arrangement or a number of connected electronic control arrangements. Said one electronic control arrangement or said number of connected electronic control arrangements may be arranged to perform the steps according to the method depicted herein.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

Herein the term "deformation" of the bearing housing of the rotary encoder concerns elastic deformation. Herein the term "affecting" may mean "providing a number of forces" (to the bearing housing). Herein the term "affecting" may mean "influencing" (the bearing housing).

Herein it is depicted that the pressing force F1 and the pulling forces F2 and F3 are applied to the bearing housing or gripping elements of the bearing housing having predetermined force magnitudes. The forces F1-F3 are hereby causing a desired deformation of the bearing housing so as to allow insertion of the bearing configuration into the bearing housing. The forces F1-F3 may hereby be applied in such a way that a predetermined radial distance movement of the bearing housing at positions of the applied forces F1-F3 is achieved. The forces F1-F3 may be of such a magnitude that a predetermined deformation of the bearing housing allowing insertion/positioning of the bearing configuration is achieved.

According to one example the pressing force F1 and the pulling forces F2 and F3 are applied to the bearing housing or gripping elements of the bearing housing in an non-symmetrical manner, still affecting the inner diameter of the bearing housing so as to allow insertion, positioning and fixation of the bearing configuration.

Figure 2a schematically illustrates a rotary encoder 200 according to an embodiment of the invention. The rotary encoder 200 comprises a shaft 210. The shaft 210 is configured to be attached to a rotating device of an assembly, such as the assembly 100 which assembly is depicted in greater detail with reference to Figure 1. The rotary encoder 200 is arranged to determine values of a set of operational parameters of the shaft 210. The operational parameters may be characteristics of operation of the assembly 100. According to one example the set of operational parameters may comprise the parameter "prevailing angular position of the shaft 210". According to one example the set of operational parameters may comprise any of the parameters: prevailing angular position of the shaft 210 and rotational speed of the shaft 210.

According to one example the shaft 210 may be connectable to a rotating device of the assembly 100 by any suitable fastening means. This allows a connection in a rotatable fixed manner. According to one example a connection between the shaft 210 and a rotating device of the assembly is performed via a shaft coupling device. According to one example a connection between the shaft 210 and a rotating device of the assembly is performed via a clutch. This allows a releasable connection.

A first bearing unit 220a is provided. The first bearing unit 220a is arranged to be fixedly arranged to the shaft 210. The first bearing unit 220a may comprise any suitable bearings. A second bearing unit 220b is provided. The second bearing unit 220b is arranged to be fixedly arranged to the shaft 210. The second bearing unit 220b may comprise any suitable bearings.

A spring member 240 is arranged to provide a pre-stressing condition. The spring member 240 is arranged to be arranged to the shaft 210 between the first bearing unit 220a and the second bearing unit 220b. The spring member 240 may be any suitable spring element. According to one embodiment the spring member 240 is a wave spring. The wave spring may comprise a coiled flat wire with waves. The wave spring may be a single turn wave spring. The wave spring may be a multi turn wave spring. The spring member 240 may according to one example be a coil spring. According to one embodiment the spring member 240 comprises a number of spring elements being arranged to provide a pre-stressed state of the bearing units of the rotary encoder 200 in an axial direction. The spring member 240 may be denoted wave washer.

According to one example there is provided least two bearing units at the shaft 210 for achieving a balanced and low-vibration operation of the rotary encoder 200.

A bearing housing 230 is provided. The bearing housing 230 may consist of any suitable material, such as a metal or alloy, e.g. copper or stainless steel. The bearing housing 230 may consist at least partly of a plastic material. The bearing houses 430 and 530 depicted below may consist of the same material.

The rotary encoder 200 works by being configured to detect relative rotation of a rotor 250 and a stator 260. The rotor 250 is arranged to be fixedly secured at the shaft 210. The rotation of the rotor 250 with respect to the stator 260 may be detected using any technology capable of detecting such changes. Examples of such technologies include capacitive, optical, inductive and magnetic detection. The rotary encoder 200 may be configured as an incremental and/or an absolute rotary encoder. The terms rotor and stator may refer to single components as well as aggregates serving a common function of rotor or stator.

The rotor 250 further comprises a first disc having a scale for detection of relative rotation between the rotor 250 and the stator 260. The first disc is mounted at the shaft 210. When the shaft 210 rotates with respect to the stator 260, rotation measurement circuitry at the stator 260 can detect changes in the scale with respect to the rotation measurement circuitry. For instance, the scale may comprise inductive, capacitive and/or magnetic elements configured to cause a corresponding inductive, capacitive or magnetic signal when the first disc is rotated with respect to the stator 260. The scale may be part of an optical rotary encoder wherein the rotary encoder is configured to shine a light onto a photodiode through slits in the first disc. Alternatively, a reflective version of an optical rotation measurement technology for an optical rotary encoder may be used. Alternatively, any suitable components being arranged for detecting operational parameters may be used in the rotary encoder 200. The components are chosen on the basis of the operation parameter detection method of the rotary encoder 200.

The stator 260 comprises a second disc. The second disc comprises measurement apparatus configured to detect relative motion of the first and second discs, e.g. by detecting said inductive, optical, capacitive or magnetic signals. The second disc may be a printed circuit board.

The rotor 250 may be denoted "graduation carrier" or "code disc". The stator 260 may be denoted "detector". According to one example the stator 260 is not disc-shaped and may be denoted "scanner" or "scanning unit".

A first control arrangement 201 is arranged for communication with the rotary encoder 200 via a link L201, see Fig. 1. According to one embodiment the first control arrangement 201 is arranged for communication with the rotation measurement circuitry at the stator 260 via the link L201. Hereby the stator 260 is arranged to send signals comprising information about operational parameters to the first control arrangement 201 via the link L201.

The first control arrangement 201 is arranged to determine values of the operational parameters. The first control arrangement 201 is arranged for presenting determined values of the operational parameters via any suitable presentation means (not shown) to an operator of the assembly 100 and/or the rotary encoder 200.

A second control arrangement 202 is arranged for communication with the first control arrangement 201 via a link L202. It may be releasably connected to the first control arrangement 201. It may be a control arrangement external to the assembly 100. It may be used to cross-load software to the first control arrangement 201, particularly software for determining operational parameters. It may alternatively be arranged for communication with the first control arrangement 201 via an internal network of the assembly 100. It may be adapted to performing functions corresponding to those of the first control arrangement 201. The second control arrangement 202 may be arranged for operating the assembly 100. For example the second control arrangement 202 may be arranged to control operation of the motor 120 and the clutch 140 of the assembly 100.

According to one example the rotary encoder 200 is arranged to be connected to an assembly 100 for detecting operational parameters thereof. According to one example a set comprising the rotary encoder 200 and the first control arrangement 201 is arranged to be connected to an assembly comprising the second control arrangement 202, wherein the second control arrangement 202 is a control arrangement being external to the rotary encoder 200. The set comprising the rotary encoder 200 and the first control arrangement 201 may thus according to one example be arranged for being "plugged-in" to an assembly 100 where operational parameters are to be detected for various purposes.

According to one embodiment the rotation measurement circuitry at the stator 260 may be arranged to perform the same functions as the first control arrangement 201 and the second control arrangement 202. Herein detection of operational parameters may be performed by any of the rotation measurement circuitry at the stator 260, the first control arrangement 201 and/or the second control arrangement 202.

According to one example any suitable locking device may be provided for fixedly securing the shaft 210 to the shaft being external to the rotary encoder 200.

The rotary encoder 200 may further be configured for electromagnetic compatibility scenarios. The bearing housing 230 of the rotary encoder 200 may be arranged to fixate and protect fragile EMC components from vibrations. According to some aspects, the rotary encoder 200 further comprises electrostatic discharge, ESD, shielding arranged to shield the rotary encoder 200 from electrostatic charge and/or discharge. According to some aspects, the rotary encoder 200 further comprises electromagnetic shielding arranged to prevent electromagnetic radiation to and/or from the rotary encoder 200 exceeding a predetermined threshold. According to some aspects, the rotary encoder 200 is configured to function without degradation in the presence of a predetermined electromagnetic disturbance. In other words, according to some aspects, the rotary encoder 200 is configured to be electromagnetically immune to a predetermined radio frequency interference.

According to some aspects, the rotary encoder 200 further may comprise a set of sealing components arranged at the rotary encoder 200. The set of sealing components is arranged to seal the rotary encoder 200 from an environment.

According to some aspects, the rotary encoder 200 comprises a set of sealing components. The set of sealing components is arranged to seal the rotary encoder 200 from an environment.

According to some aspects, the rotary encoder 200 comprises a set of spacers. The set of spacers is configured to fix a relative position between two or more components of the rotary encoder 200.

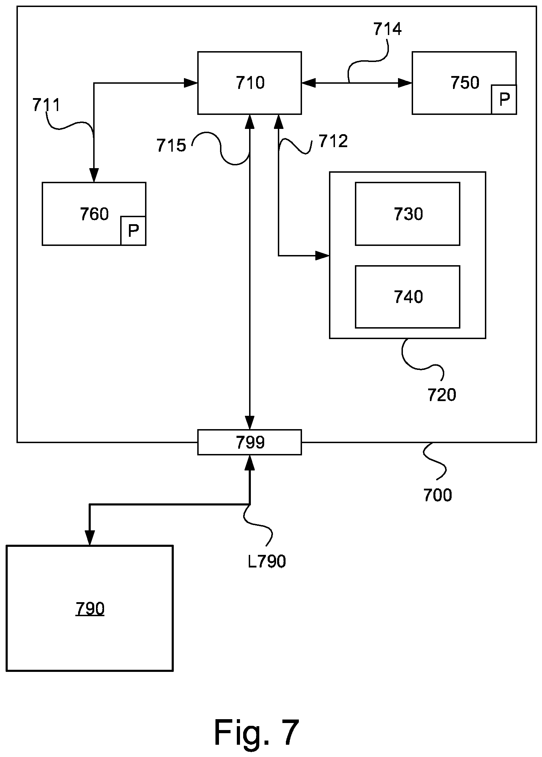

Figure 2b schematically illustrates an exploded view of a sub-set of a rotary encoder 200. The first bearing unit 220a is attached to the shaft 210 at a predetermined axial position. The first bearing unit 220a may be attached to the shaft 210 in any suitable manner. According to one example the first bearing unit 220a is attached to the shaft 210 by means of a pressing process. According to one example the first bearing unit 220a is attached to the shaft 210 by means of a clamping process. According to one example the first bearing unit 220a is attached to the shaft 210 by means of an adhesive. The first bearing unit 220a may be attached to the shaft 210 by means of a machine 790 (see Fig. 7). The first bearing unit 220a may be attached to the shaft 210 by means of any suitable device/machine/arrangement. The first bearing unit 220a is fixedly attached to the shaft 210.

The spring member 240 is provided about the shaft 210 at one side of the first bearing unit 220a.

The second bearing unit 220b is attached to the shaft 210 at a predetermined axial position. Hereby the spring member is sandwiched between the first bearing unit 220a and the second bearing unit 220b. The second bearing unit 220b may be attached to the shaft 210 in any suitable manner. According to one example the second bearing unit 220b is attached to the shaft 210 by means of a pressing process. According to one example the second bearing unit 220b is attached to the shaft 210 by means of a clamping process. According to one example the second bearing unit 220b is attached to the shaft 210 by means of an adhesive. The second bearing unit 220b may be attached to the shaft 210 by means of the machine 790. The second bearing unit 220b may be attached to the shaft 210 by means of any suitable device/machine/arrangement. The second bearing unit 220b is fixedly attached to the shaft 210.

The assembly of the shaft 210, first bearing unit 220a, spring member 240, second bearing unit 220b and rotor 250 is denoted bearing configuration 290.

According to one example the bearing configuration 290 comprises the shaft 210, first bearing unit 220a, second bearing unit 220b and rotor 250 when being mounted in the rotary encoder 200. According to this configuration no spring member 240 is mounted on the shaft 210 for providing a pre-stressed state of the first bearing unit 220a and the second bearing unit 220b in an axial direction when assembling the rotary encoder 200. Instead external forces are applied so as to achieve a pre-stressed state of the first bearing unit 220a and the second bearing unit 220b in an axial direction. After the bearing configuration 290 according to this example has been positioned and fixedly secured within the bearing housing (230; 430; 530) the external forces achieving the pre-stressed state of the first bearing unit 220a and the second bearing unit 220b in an axial direction are removed. According to this example the first bearing unit 220a and the second bearing unit 220b are arranged in a pre-stressed state in an axial direction towards each other within the bearing housing (230; 430; 530). The external forces achieving the pre-stressed state of the first bearing unit 220a and the second bearing unit 220b in an axial direction are according to this example pushing forces.

According to one example the bearing configuration 290 comprises the shaft 210, first bearing unit 220a, second bearing unit 220b and rotor 250 when being mounted in the rotary encoder 200. According to this configuration no spring member 240 is mounted on the shaft 210 for providing a pre-stressed state of the first bearing unit 220a and the second bearing unit 220b in an axial direction when assembling the rotary encoder 200. Instead external forces are applied so as to achieve a pre-stressed state of the first bearing unit 220a and the second bearing unit 220b in an axial direction. After the bearing configuration 290 according to this example has been positioned and fixedly secured within the bearing housing (230; 430; 530) the external forces achieving the pre-stressed state of the first bearing unit 220a and the second bearing unit 220b in an axial direction are removed. According to this example the first bearing unit 220a and the second bearing unit 220b are arranged in a pre-stressed state in an axial direction away from each other within the bearing housing (230; 430; 530). The external forces achieving the pre-stressed state of the first bearing unit 220a and the second bearing unit 220b in an axial direction are according to this example pulling forces.

The external pushing and pulling forces, respectively, may be applied by any suitable means. The external pushing and pulling forces, respectively, may be of any suitable magnitude so as to achieve a predetermined pre-stressed state of the first bearing unit 220a and the second bearing unit 220b.

Figure 2c schematically illustrates a rotary encoder 200 according to an embodiment of the invention.

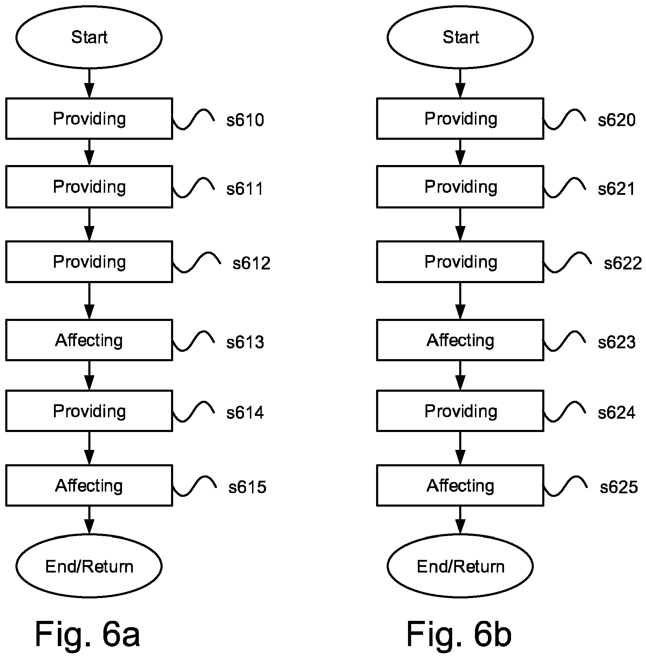

Hereby it is illustrated that the bearing configuration 290 is arranged internally of the bearing housing 230 at a predetermined axial position. The process of inserting the bearing configuration 290 is further depicted with reference to e.g. Fig. 6a.

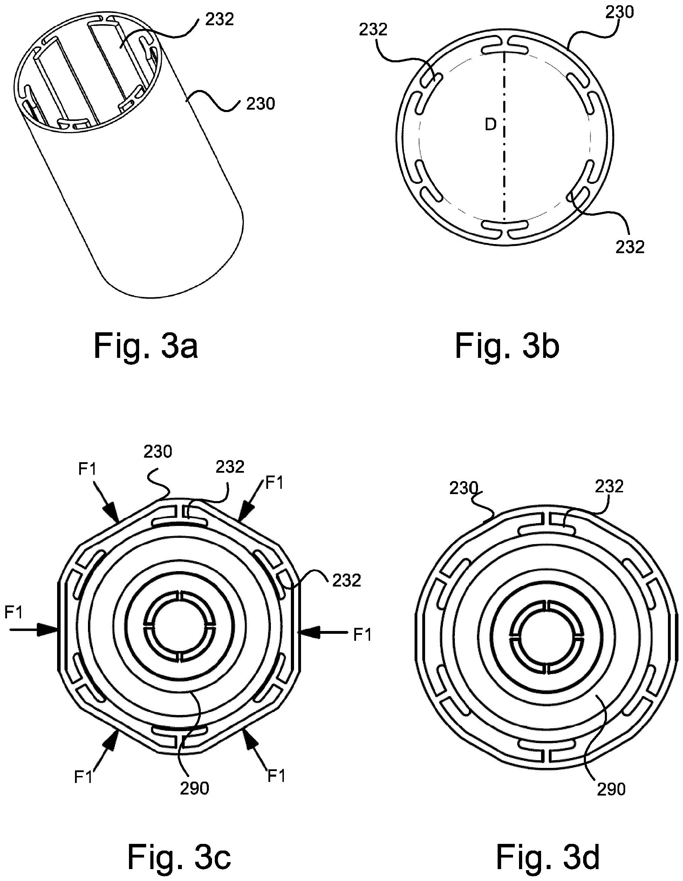

Figure 3a schematically illustrates a perspective view of a bearing housing 230 according to a first example. This bearing house configuration is also denoted a first profile 1.

The bearing housing 230 is according to this example a circular cylinder provided with a number of ribs 232 arranged internally of the bearing housing 230. The ribs 232 may also be denoted fixating means or holding means. The bearing housing 230 is dimensioned so as to, an affected state, receive the first bearing unit 220a, the spring member 240, the second bearing unit 220b and the stator 250 of the bearing configuration 290.

The bearing housing 230 may be arranged with any suitable number of ribs 232. According to one embodiment the ribs 232 are provided in a symmetrical manner. According to this example six ribs are provided. Hereby the ribs 232 are positioned such that they are separated from each other by 60 degrees. According to one example a number of ribs 232 are provided in a non-symmetrical manner.

According to other examples multiple ribs 232 are provided, such as e.g. four or ten ribs. The ribs 232 are elongated members and arranged in an axial direction of the bearing housing 230. The ribs 232 may be equally long as the axial length of the bearing housing 230. Alternatively the ribs 232 may be shorter than the axial length of the bearing housing 230.

Figure 3b schematically illustrates a cross-sectional view of the bearing housing 230. The ribs 232 hereby presents a substantially T-shaped cross-sectional form. Inner surfaces of the ribs 232 are hereby configured to correspond to an outer curvature of the bearing configuration 290. Inner surfaces of the ribs 232 are hereby presenting a concave shape corresponding to the outer curvature of the bearing configuration 290. An internal diameter of the housing 230 is defined by a diameter limited by the inner surfaces of the ribs 232. The inner diameter of the bearing housing 230 is smaller than the outer diameter D of the bearing configuration 290. The internal diameter of the bearing housing 230 may be e.g. 1-5% smaller than the outer diameter of the bearing configuration 290. The first profile 1 is hereby presented in an original state. The first profile 1 is hereby presented in a non-affected state.

Figure 3c schematically illustrates a cross sectional view of the bearing housing 230 in an affected state. Hereby a number of external forces F1 are applied to the bearing housing 230. The external forces F1 are predetermined forces. The external forces F1 may be applied by means of the machine 790. The external forces F1 may be applied in a symmetrical manner. The applied forces F1 may be applied equidistantly. The applied forces F1 may be applied at predetermined positions/areas of the bearing housing 230. According to one example the external forces are applied at positions right between the ribs 232. The external forces F1 are applied in a radial direction towards a centre of the bearing housing 230.

Hereby the bearing housing 230 is in an affected state. Hereby the bearing housing is deformed in such a way that the internal diameter D defined by the inner surfaces of the ribs 232 is increased to allow insertion of the bearing configuration 290. Figure 3c is illustrating the affected bearing housing 230 and the inserted bearing configuration 290.

The external forces F1 is hereby applied so as to deform the bearing housing 230 in such a way that the internal diameter of the bearing housing 230 defined by the inner surfaces if the ribs is increased to a certain extent. The external forces F1 is hereby applied so as to deform the bearing housing 230 in such a way that the inner diameter is increased to a predetermined extent. Said increased predetermined extent may be e.g. 102-110% of the original internal diameter. Said increased predetermined extent may be e.g. 105-107% of the original internal diameter. In this affected state the internal diameter of the bearing housing 230 is increased to be larger than the outer diameter D of the bearing configuration 290, thus allowing insertion of the bearing configuration 290 into the bearing housing 230.

Figure 3d schematically illustrates the bearing housing 230 in an unaffected state where the bearing configuration 290 is positioned inside the bearing housing 230. Hereby the bearing configuration 290 is fixedly secured internally the bearing housing 230. Now the internal diameter of the bearing housing 230 defined by the inner surfaces of the ribs 232 is equal to the outer diameter D of the bearing configuration 290. The bearing configuration 290 is hereby arranged in a pre-stressed state inside the bearing housing 230.

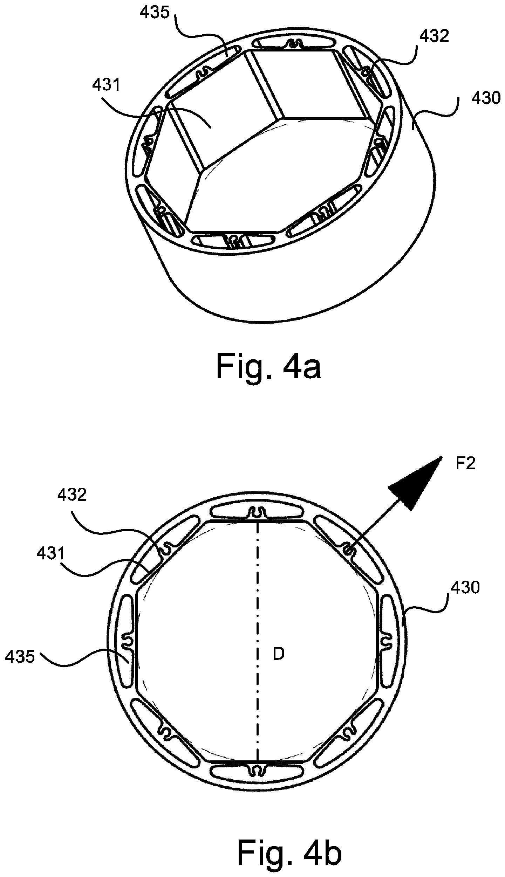

Figure 4a schematically illustrates a perspective view of a bearing housing 430 according to a second example. This bearing house configuration is also denoted a second profile 2.

The bearing housing 430 is according to this example a circular cylinder provided with a number of internal wall members 431 arranged internally of the bearing housing 430. The wall members 431 may also be denoted fixating means or holding means. The bearing housing 430 is dimensioned so as to, an affected state, receive the first bearing unit 220a, the spring member 240, the second bearing unit 220b and the stator 250 of the bearing configuration 290.

The bearing housing 430 may be arranged with any suitable number of wall members 431. According to one embodiment the wall members 431 are provided in a symmetrical manner. According to one embodiment the wall members 431 are provided in a non-symmetrical manner. According to this example eight wall members 431 are provided. The wall members 431 may have substantially flat surfaces facing the centre of the bearing housing 430. According to one example the wall members 431 may have concave surfaces facing the centre of the bearing housing 430, corresponding to the curvature of the outer surface of the bearing configuration 290.

According to other examples at least two wall members 431 are provided, such as e.g. three, four or ten wall members 431. The wall members 431 are arranged in an axial direction of the bearing housing 430. The wall members 431 may be equally long as the axial length of the bearing housing 430. Alternatively at least one of the wall members 431 may be shorter than the axial length of the bearing housing 430.

The wall members 431 are arranged such that a respective space 435 is formed in the bearing housing 430. At a surface of the respective wall members 431 facing the space of the bearing housing 430 there is arranged a gripping means 432. The gripping means 432 is arranged to be attached to a corresponding pulling means of the machine 790. Hereby the machine 790 is arranged to connect pulling means to each of the gripping means 432 and apply a pulling force F2 in a radial direction outwards. The pulling means may comprise pins or rods or any other suitable means depending upon the configuration of the gripping means 432.

Figure 4b schematically illustrates a cross-sectional view of the bearing housing 430. An internal diameter of the housing 430 is defined by a diameter limited by the inner surfaces of the wall members 431. The internal diameter of the bearing housing 430 is smaller than the outer diameter D of the bearing configuration 290. The internal diameter of the bearing housing 430 may be e.g. 1-5% smaller than the outer diameter of the bearing configuration 290. The second profile 2 is hereby presented in an original state. The second profile 2 is hereby presented in a non-affected state.

By applying the pulling forces F2 to the gripping means 432 the internal diameter of the bearing housing defined by the inner surfaces of the wall members 431 is increased. Only one applied pulling force F2 is illustrated, however according to this example a pulling force F2 is applied to each of the eight gripping means 432.

The pulling forces F2 are predetermined forces. The pulling forces F2 may be applied by means of the machine 790. The pulling forces F2 may be applied in a symmetrical manner. The applied pulling forces F2 may be applied to the gripping means 432, which gripping means 432 are provided at predetermined positions/areas of the wall members 431. According to one example the gripping means 432 are provided at positions centrally arranged at the wall members 431. The pulling forces F2 are applied in a radial direction outwards a centre of the bearing housing 430. Hereby the bearing housing 430 may be set in an affected state. Hereby the wall members 431 are deformed in such a way that the internal diameter defined by the surfaces of the wall members 431 is increased to allow insertion of the bearing configuration 290.

The pulling forces F2 are hereby applied so as to deform the wall members 431 of the bearing housing 430 in such a way that the internal diameter of the bearing housing defined by the inner surfaces if the wall members 431 is increased to a certain extent. The pulling forces F2 are hereby applied so as to deform the wall members 431 of the bearing housing 430 in such a way that the inner diameter is increased to a predetermined extent. Said increased predetermined extent may be e.g. 102-110% of the original internal diameter. Said increased predetermined extent may be e.g. 105-107% of the original internal diameter. In this affected state the internal diameter of the bearing housing 430 is increased to be larger than the outer diameter D of the bearing configuration 290, thus allowing insertion of the bearing configuration 290 into the bearing housing 430.

After the bearing configuration 290 has been inserted and positioned in the bearing housing 430 the pulling forces F2 are removed. Hereby the bearing housing 430 is in an un-affected state where the bearing configuration 290 is positioned inside the bearing housing 430. Hereby the bearing configuration 290 is fixedly secured internally the bearing housing 430. Now the internal diameter of the bearing housing 430 defined by the inner surfaces of the wall members is equal to the outer diameter D of the bearing configuration 290. The bearing configuration 290 is hereby arranged in a pre-stressed state inside the bearing housing 430.

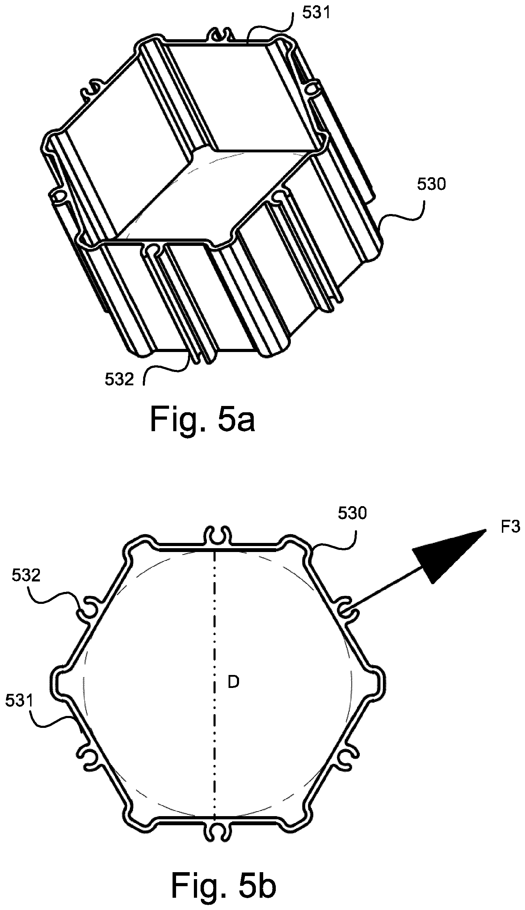

Figure 5a schematically illustrates a perspective view of a bearing housing 530 according to a third example. This bearing house configuration is also denoted a third profile 3.

The bearing housing 530 is according to this example shaped as a hexagonal having six walls 531. Each of the outer surfaces of the walls is provided with a gripping means 532. The inner surfaces of the bearing housing 530 may also be denoted fixating means or holding means. The bearing housing 530 is dimensioned so as to, in an affected state, receive the first bearing unit 220a, the spring member 240, the second bearing unit 220b and the stator 250 of the bearing configuration 290.

The bearing housing 530 may be arranged with any suitable number of walls 231. According to one embodiment the walls 231 are provided in a symmetrical manner, thus being shaped as e.g. a triangle, pentagon, or any other suitable polygon. According to one embodiment the walls 231 are provided in a non-symmetrical manner, thus not being shaped as a symmetrical polygon. According to this example six walls are provided. The walls may have substantially flat surfaces facing the centre of the bearing housing 530. According to one example the walls may have concave surfaces facing the centre of the bearing housing 530, at least partly corresponding to the curvature of the outer surface of the bearing configuration 290.

The gripping means 532 may be arranged in an axial direction of the bearing housing 530. The gripping means 532 may be equally long as the axial length of the bearing housing 530. Alternatively at least one of the gripping means may be shorter than the axial length of the bearing housing 530.

The gripping means 532 is arranged to be attached to a corresponding pulling means of the machine 790. Hereby the machine 790 is arranged to connect pulling means to each of the gripping means 532 and apply a pulling force F3 in a radial direction outwards.

Figure 5b schematically illustrates a cross-sectional view of the bearing housing 530. An internal diameter of the housing 530 is defined by a diameter limited by the inner surfaces of the walls 531. The internal diameter of the bearing housing 530 is smaller than the outer diameter D of the bearing configuration 290. The internal diameter of the bearing housing 530 may be e.g. 1-5% smaller than the outer diameter of the bearing configuration 290. The third profile 3 is hereby presented in an original state. The third profile 3 is hereby presented in a non-affected state.

By applying the pulling forces F3 to the gripping means 532 the internal diameter of the bearing housing 530 defined by the inner surfaces of the walls is increased. Only one applied pulling force F3 is illustrated, however according to this example a pulling force F3 is applied to each of the six gripping means 532.

The pulling forces F3 are predetermined forces. The pulling forces F3 may be applied by means of the machine 790. The pulling forces F3 may be applied in a symmetrical manner. The applied pulling forces F3 may be applied to the gripping means 532, which gripping means 532 are provided at predetermined positions/areas of the walls 531. According to one example the gripping means 532 are provided at positions centrally arranged at the outer surface of each wall 531. The pulling forces F3 are applied in a radial direction outwards a centre of the bearing housing 530. Hereby the bearing housing 530 may be set in an affected state. Hereby the walls 531 are deformed in such a way that the internal diameter defined by the inner surfaces of the walls 531 is increased to allow insertion of the bearing configuration 290.

The pulling forces F3 are hereby applied so as to deform the walls 531 of the bearing housing 530 in such a way that the internal diameter of the bearing housing defined by the inner surfaces of the walls 531 is increased to a certain extent. The pulling forces F3 are hereby applied so as to deform the walls 531 of the bearing housing 530 in such a way that the inner diameter is increased to a predetermined extent. Said increased predetermined extent may be e.g. 102-110% of the original internal diameter. Said increased predetermined extent may be e.g. 105-107% of the original internal diameter. In this affected state the internal diameter of the bearing housing 530 is increased to be larger than the outer diameter D of the bearing configuration 290, thus allowing insertion of the bearing configuration 290 into the bearing housing 530.

After the bearing configuration 290 has been inserted and positioned in the bearing housing 530 the pulling forces F3 are removed. Hereby the bearing housing 530 is in an un-affected state where the bearing configuration 290 is positioned inside the bearing housing 530. Hereby the bearing configuration 290 is fixedly secured internally the bearing housing 530. Now the internal diameter of the bearing housing 530 defined by the inner surfaces of the walls 531 is equal to the outer diameter D of the bearing configuration 290. The bearing configuration 290 is hereby arranged in a pre-stressed state inside the bearing housing 530.

Figure 6a schematically illustrates a flow chart of a method for assembling a rotary encoder 200. According to this example a bearing housing 230 of the rotary encoder 200 depicted with reference to Fig. 3a-d is at hand.

The method comprises a method step s610. The method step s610 comprises the step of providing a first bearing unit 220a. Hereby the first bearing unit 220a is pressed onto a shaft 210. Alternatively, the first bearing unit 220a may be attached to the shaft 210 by means of an adhesive, such as glue. Hereby the first bearing unit 220a is fixedly secured at the shaft 210. The first bearing unit 220a is attached to the shaft 210 at a predetermined position of the shaft 210. This may be performed by means of the machine 790. The operation of the machine 790 is according to this example controlled by means of the control arrangement 700. The control arrangement 700 is depicted in greater detail with reference to Figure 7. Alternatively positioning and fastening of the first bearing unit 220a may be performed manually by means of any suitable tools/equipment/devices. After the method step s610 a subsequent method step s611 is performed.

The method step s611 comprises the step of providing a spring member 240. The spring member 240 is depicted in greater detail with reference to Figure 2a-c. The spring member 240 is according to this example a wave washer. The spring member 240 is arranged about the shaft 210 towards one side of the first bearing unit 220a. The spring member 240 is according to one example arranged at a predetermined position of the shaft 210. The spring member 240 may be arranged at any suitable position of the shaft 210 between the first bearing unit 220a and the second bearing unit 220b. This may be performed by means of the machine 790. The operation of the machine 790 is according to this example controlled by means of the control arrangement 700. Alternatively positioning of the spring member 240 is performed manually by means of any suitable tools/equipment/devices. After the method step s611 a subsequent method step s612 is performed.

The method step s612 comprises the step of providing a second bearing unit 220b. Hereby the second bearing unit 220b is pressed onto the shaft 210. Alternatively, the second bearing unit 220b may be attached to the shaft 210 by means of an adhesive, such as glue. Hereby the second bearing unit 220b is fixedly secured at the shaft 210. The second bearing unit 220b is attached to the shaft 210 at a predetermined position of the shaft 210. The second bearing unit 220b is attached to the shaft 210 at a position of the shaft 210 providing a predetermined axial distance between the first bearing unit 220a and the second bearing unit 220b. The second bearing unit 220b is positioned at the shaft 210 facing one side of the spring member 240. The spring member 240 is hereby sandwiched between the first bearing unit 220a and the second bearing unit 220b. The spring member 240 is arranged to provide a pre-stressing state affecting both the first bearing unit 220a and the second bearing unit 220b. The spring member 240 is arranged to provide a pre-stressing state affecting both the first bearing unit 220a and the second bearing unit 220b in an axial direction. Provision of the second bearing unit 220b may be performed by means of the machine 790. The operation of the machine 790 is according to this example controlled by means of the control arrangement 700. Alternatively positioning and fastening of the second bearing unit 220b may be performed manually by means of any suitable tools/equipment/devices.

The method step s612 further comprises the step of providing a rotor 250. The rotor 250 is attached to the shaft 210 facing one side of the second bearing unit 220b. The rotor 250 is fixedly secured about the shaft 210. Hereby a bearing configuration 290 comprising the shaft 210, first bearing unit 220a, spring member 240, second bearing unit 220b and the rotor 250 has been assembled. After the method step s612 a subsequent method step s613 is performed.

The method step s613 comprises the step of affecting the housing 230. The housing 230 is hereby affected by external forces F1 in a radial direction towards a centre of the housing 230. The external forces are applied at predetermined positions/areas of the outer surface of the housing 230. The applied external forces F1 are of a predetermined magnitude. The magnitudes of the applied forces F1 are predetermined magnitudes. The magnitudes of the applied forces F1 may have been empirically determined. The external forces F1 may be applied in a symmetrical manner. The external forces F1 are applied in such a way that an internal diameter of the housing 230 being defined by a number of ribs 235 is increased to a predetermined extent. In such a state, wherein a deformation of the bearing housing 230 is at hand, insertion and positioning of the bearing configuration 290 is possible. This state of the bearing housing 230 may be referred to as a deformed state. This state of the bearing housing 230 may be referred to as a second state of the housing 230. The process of providing an increased internal diameter of the bearing housing defined by the ribs 235 is further depicted with reference to Fig. 3a-d.

The effect of the housing according to the step s613 may be performed by means of the machine 790. The operation of the machine 790 is according to this example controlled by means of the control arrangement 700. After the method step s613 a subsequent method step s614 is performed.

The method step s614 comprises the step of providing the bearing configuration 290 comprising the shaft 210, first bearing unit 220a, spring member 240, second bearing unit 220b and the rotor 250. Hereby the bearing configuration 290 is inserted in the affected/deformed housing 230. In other words, hereby the bearing configuration 290 is inserted in the bearing housing 230 being in the second state. The bearing configuration 290 is inserted to a predetermined axial position of the housing 230. Hereby a certain position of the bearing configuration 290 is axially aligned with a certain position of the housing 230. After the method step s614 a subsequent method step s615 is performed.

The method step s615 comprises the step of affecting the housing 230. The housing 230 is hereby affected in such a way that the applied external forces F1 towards the centre of the housing 230 are removed. After the external forces F1 no longer are applied at predetermined positions/areas of the external surface of the bearing housing 230 the geometry of the housing 230 is changed . In other words, the applied external forces F1 are removed in such a way that an internal diameter of the bearing housing 230 being defined by a number of ribs 235 is decreased to a diameter of the outer surface of the bearing configuration 290. In such a state, wherein a deformation of the bearing housing 230 is not at hand, the inserted and positioned bearing configuration 290 is fastened. This state of the bearing housing 230 may be referred to as a non-deformed state. This state of the housing 230 may be referred to as a first state of the housing 230. The process of arranging the bearing configuration in a pre-stressed state is further depicted with reference to Fig. 3a-d.

The method step s615 may also comprise the step of providing a stator 260. The stator 260 is arranged in any suitable manner so as to allow proper detection of operational parameters. After the method step s615 the method ends.

Figure 6b schematically illustrates a flow chart of a method for assembling a rotary encoder 200. According to this example a bearing housing 430 of the rotary encoder 200 depicted with reference to Fig. 4a-b or a bearing housing 530 of the rotary encoder 200 depicted with reference Fig. 5a-b is at hand.

The method comprises a method step s620. The method step s620 comprises the step of providing a first bearing unit 220a. Hereby the first bearing unit 220a is pressed onto the shaft 210. Alternatively, the first bearing unit 220a may be attached to the shaft 210 by means of an adhesive, such as glue. Hereby the first bearing unit 220a is fixedly secured at the shaft 210. The first bearing unit 220a is attached to the shaft 210 at a predetermined position of the shaft 210. This may be performed by means of the machine 790. The operation of the machine 790 is according to this example controlled by means of the control arrangement 700. The control arrangement 700 is depicted in greater detail with reference to Figure 7. Alternatively positioning and fastening of the first bearing unit 220a may be performed manually by means of any suitable tools/equipment/devices. After the method step s620 a subsequent method step s621 is performed.

The method step s621 comprises the step of providing the spring member 240. The spring member 240 is arranged about the shaft 210 towards one side of the first bearing unit 220a. The spring member 240 may according to one example be arranged at a predetermined position of the shaft 210. The spring member 240 may be arranged at any suitable position of the shaft 210 between the first bearing unit 220a and the second bearing unit 220b. This may be performed by means of the machine 790. The operation of the machine 790 is according to this example controlled by means of the control arrangement 700. Alternatively positioning of the spring member 240 is performed manually by means of any suitable tools/equipment/devices. After the method step s621 a subsequent method step s622 is performed.

The method step s622 comprises the step of providing a second bearing unit 220b. Hereby the second bearing unit 220b is pressed onto the shaft 210. Alternatively, the second bearing unit 220b may be attached to the shaft 210 by means of an adhesive, such as glue. Hereby the second bearing unit 220b is fixedly secured at the shaft 210. The second bearing unit 220b is attached to the shaft 210 at a predetermined position of the shaft 210. The second bearing unit 220b is attached to the shaft 210 at a position of the shaft 210 providing a predetermined axial distance between the first bearing unit 220a and the second bearing unit 220b. The second bearing unit 220b is positioned at the shaft 210 facing one side of the spring member 240. The spring member 240 is hereby sandwiched between the first bearing unit 220a and the second bearing unit 220b. The spring member 240 is arranged to provide a pre-stressing state affecting both the first bearing unit 220a and the second bearing unit 220b. The spring member 240 is arranged to provide a pre-stressing state affecting both the first bearing unit 220a and the second bearing unit 220b in an axial direction. Provision of the second bearing unit 220b may be performed by means of the machine 790. The operation of the machine 790 is according to this example controlled by means of the control arrangement 700. Alternatively positioning and fastening of the second bearing unit 220b may be performed manually by means of any suitable tools/equipment/devices.

The method step s622 further comprises the step of providing a rotor 250. The rotor 250 is attached to the shaft 210 facing one side of the second bearing unit 220b. The rotor 250 is fixedly secured about the shaft 210.

Hereby a bearing configuration 290 comprising the shaft 210, first bearing unit 220a, spring member 240, second bearing unit 220b and the rotor 250 has been assembled. After the method step s622 a subsequent method step s623 is performed.

According to one embodiment the method step s623 comprises the step of affecting gripping means 432 of the housing 430. This embodiment relates to the bearing housing 430 comprising the gripping means 432 depicted with reference to Fig. 4a-b. The gripping means 432 of the wall members 431 of the bearing housing 430 are hereby affected by external pulling forces F2 in a radial direction outwards a centre of the bearing housing 430. The external pulling forces F2 are applied at gripping means 432 of the housing 230. The applied external pulling forces F2 are of a predetermined magnitude. The magnitudes of the applied pulling forces F2 are predetermined magnitudes. The magnitudes of the applied pulling forces F2 may have been empirically determined. The external pulling forces F2 may be applied in a symmetrical manner. The external pulling forces F2 are applied in such a way that an internal diameter of the bearing housing 430 being defined by a number wall members 431 is increased to a predetermined extent. In such a state, wherein a deformation of the wall members 431 is at hand, insertion and positioning of the bearing configuration 290 is possible. This state of the housing 430 comprising the gripping means 432 may be referred to as a deformed state. This state of the bearing housing 430 comprising the gripping means 432 may be referred to as a second state of the housing 230. The process of providing an increased internal diameter of the bearing housing 430 defined by the wall members 431 is further depicted with reference to Fig. 4a-b. The effect of the gripping means 432 of the bearing housing 230 according to the step s623 may be performed by means of the machine 790. The operation of the machine 790 is according to this example controlled by means of the control arrangement 700.

According to one embodiment the method step s623 comprises the step of affecting the housing 530. This embodiment relates to the bearing housing depicted with reference to Fig. 5a-b. The housing 530 is hereby affected by external pulling forces F3 in a radial direction outwards a centre of the housing 530. The external pulling forces F3 are applied at gripping means 532 of the bearing housing 530. The applied external pulling forces F3 are of a predetermined magnitude. The magnitudes of the applied pulling forces F3 are predetermined magnitudes. The magnitudes of the applied pulling forces F3 may have been empirically determined. The external pulling forces F3 may be applied in a symmetrical manner, such as at each gripping means 532 arranged at the outer surface of the respective wall of the bearing housing 530. The external pulling forces F3 are applied in such a way that an internal diameter of the housing 530 being defined by the geometry of the internal surfaces of the bearing housing 530 is increased to a predetermined extent. In such a state, wherein a deformation of the bearing housing 530 is at hand, insertion and positioning of the bearing configuration 290 is possible. This state of the housing 530 may be referred to as a deformed state. This state of the bearing housing 530 may be referred to as a second state of the bearing housing 530. The process of providing an increased internal diameter of the housing 530 defined by the geometry of the internal surfaces of the bearing housing 530 is further depicted with reference to Fig. 5a-b. The effect of the housing 530 according to the step s623 may be performed by means of the machine 790. The operation of the machine 790 is according to this example controlled by means of the control arrangement 700. After the method step s623 a subsequent method step s624 is performed.

The method step s624 comprises the step of providing the bearing configuration 290 comprising the shaft 210, first bearing unit 220a, spring member 240, second bearing unit 220b and the rotor 250. Hereby the bearing configuration 290 is inserted in the bearing housing 430 or the bearing housing 530. In other words, hereby the bearing configuration 290 is inserted in the bearing housing 430 or the bearing housing 530 being in the second state. The bearing configuration 290 is inserted to a predetermined axial position of the bearing housing 430 or the bearing housing 530. After the method step s624 a subsequent method step s625 is performed.

According to one embodiment (relating to Profile 2 of the housing 430) the method step s625 comprises the step of affecting the bearing housing 430. The bearing housing 430 is hereby affected in such a way that the applied external pulling forces F2 are removed. After the external pulling forces F2 no longer are applied at gripping means 432 of the bearing housing 430 the wall members 431 are holding the bearing configuration in a pre-stressed state. In such a state, wherein a deformation of the bearing housing 430 is not at hand, the inserted and positioned bearing configuration 290 is fastened. This state of the bearing housing 430 may be referred to as a non-deformed state. This state of the bearing housing 430 may be referred to as a first state of the bearing housing 430. The process of deceasing the internal diameter of the bearing housing 430 defined by the wall members 431 is further depicted with reference to Fig. 4a-b.

According to one embodiment (relating to Profile 3 of the housing 530) the method step s625 comprises the step of affecting the bearing housing 530. The bearing housing 530 is hereby affected in such a way that the applied external pulling forces F3 outwards the centre of the bearing housing 530 are removed. After the external pulling forces F3 no longer are applied at the gripping means 532 of the respective outer surface of the bearing housing 530 the geometry of the housing 530 is changed. In other words, the applied external pulling forces F3 are removed in such a way that walls 531 are holding the bearing configuration 290 in a pre-stressed state. In such a state, wherein a deformation of the bearing housing 530 is not at hand, the inserted and positioned bearing configuration 290 is fastened. This state of the bearing housing 530 may be referred to as a non-deformed state. This state of the bearing housing 530 may be referred to as a first state of the bearing housing 530. The process of deceasing the internal diameter of the bearing housing 530 defined by the internal surfaces of the walls 531 is further depicted with reference to Fig. 5a-b.

The method step s625 may also comprise the step of providing a stator 260. The stator 260 is arranged in any suitable manner so as to allow proper detection of operational parameters. After the method step s625 the method ends.

Figure 7 is a diagram of one version of a device 700. The control arrangements 201 and 202 described with reference to Figure 1 may in one version comprise the device 700. According to one example the rotation measurement circuitry of the stator 260 may comprise the device 700. The device 700 comprises a non-volatile memory 720, a data processing unit 710 and a read/write memory 750. The non-volatile memory 720 has a first memory element 730 in which a computer program, e.g. an operating system, is stored for controlling the function of the device 700. The device 700 further comprises a bus controller, a serial communication port, I/O means, an A/D converter, a time and date input and transfer unit, an event counter and an interruption controller (not depicted). The non-volatile memory 720 has also a second memory element 740.

According to an example outside the scope of the invention there is provided a computer program comprising routines for controlling the machine 790 to assemble a rotary encoder 200 according to the teachings herein.

The computer program P may comprise routines for performing any one of the method steps detailed according to the disclosure. The program P may be stored in an executable form or in compressed form in a memory 760 and/or in a read/write memory 750.

Where it is stated that the data processing unit 710 performs a certain function, it means that it conducts a certain part of the program which is stored in the memory 760 or a certain part of the program which is stored in the read/write memory 750.

The data processing device 710 can communicate with a data port 799 via a data bus 715. The non-volatile memory 720 is intended for communication with the data processing unit 710 via a data bus 712. The separate memory 760 is intended to communicate with the data processing unit via a data bus 711. The read/write memory 750 is arranged to communicate with the data processing unit 710 via a data bus 714. A link L790 is arranged for communication between the device 700 and the machine 790. The links L201, L202, L120 and L790, for example, may be connected to the data port 799 (see e.g. Fig. 1 and Fig. 7). When data are received on the data port 799, they are stored in the second memory element 740. When input data received have been stored, the data processing unit 710 will be prepared to conduct code execution as described above.

Parts of the methods herein described may be conducted by the device 700 by means of the data processing unit 710 which runs the program stored in the memory 760 or the read/write memory 750. When the device 700 runs the program, method steps and process steps herein described are executed.

The relevant method steps depicted herein may be performed by means of e.g. the device 700. Any suitable processing circuitry may be used for performing the disclosed method steps.

The computer program product comprises a computer readable medium such as, for example a universal serial bus (USB) memory, a plug-in card, an embedded drive or a read only memory (ROM). The computer readable medium has stored thereon a computer program comprising program instructions. The computer program is loadable into the processing circuitry comprised in any of the first control arrangement 201, second control arrangement 202, device 700 or the rotation measurement circuitry of the stator 260. When loaded into the processing circuitry, the computer program may be stored in a memory associated with or comprised in the processing circuitry and executed by a processor. According to some examples outside the scope of the invention, the computer program may, when loaded into and run by the processing circuitry, cause execution of method steps according to, for example, the methods illustrated in Figure 6a and 6b or otherwise described herein.

The description of the example embodiments provided herein have been presented for purposes of illustration. It should be appreciated that the example embodiments presented herein may be practiced in any combination with each other. In the drawings and specification, there have been disclosed exemplary embodiments.

## Claims

1. A rotary encoder (200) comprising a bearing configuration (290), a bearing housing (230; 430; 530) and a stator (260), the bearing configuration comprises a shaft (210), a number of bearing units (220a, 220b) and a rotor (250), wherein the bearing housing (230; 430; 530) is arranged to receive the bearing configuration (290; 210, 220a, 220b, 240, 250) internally when the bearing housing is in a deformed state, in which deformed state insertion and positioning of the bearing configuration (290) is possible due to an increased internal diameter of the bearing housing (230; 430; 530), and wherein the bearing housing (230; 430; 530) is arranged to fixedly secure the received bearing configuration (290) in a pre-stressed state in a non-deformed state.

2. The rotary encoder according to claim 1, further comprising a spring member (240) which is arranged to the shaft (210) between a first bearing unit (220a) and a second bearing unit (220b) so as to provide a pre-stressed state of the first bearing unit (220a) and the second bearing unit (220b) in an axial direction.

3. The rotary encoder according to claim 1 or 2, further comprising at least one rib (232) arranged internally of the bearing housing (230), wherein the at least one rib (232) is arranged to fixedly secure the received bearing configuration (290).

4. The rotary encoder according to any one of claims 1-3, wherein the bearing housing (230) is arranged to be affected by respective pushing forces (F1) in a direction radially inwards, whereby the bearing housing (230) is arranged to change to the deformed state, in which deformed state insertion of the bearing configuration (290) into the bearing housing (230) is possible.

5. The rotary encoder according to claim 1 or 2, further comprising at least one wall member (431) arranged internally of the bearing housing (430), wherein the at least one wall member (431) is arranged to fixedly secure the received bearing configuration (290).

6. The rotary encoder according to claim 5, wherein the at least one wall member is provided with a gripping means (432), which gripping means (432) is arranged to be affected by respective pulling forces (F2) in a direction radially outwards, whereby the bearing housing (430) is arranged to change to the deformed state, in which deformed state insertion of the bearing configuration (290) into the bearing housing (430) is possible.

7. The rotary encoder according to claim 1 or 2, wherein the bearing housing (530) has a cross section being in the shape of a polygon, and wherein at least one outside surface of the polygon is provided with a gripping means (532), which gripping means (532) is arranged for being affected by respective pulling forces (F3) in a direction radially outwards, whereby the bearing housing (530) is arranged to change to the deformed state, in which deformed state insertion of the bearing configuration (290) into the bearing housing (530) is possible.

8. An assembly (100) comprising the rotary encoder (200) according to any of the claims 1-7, the assembly being arranged to be connected to a shaft (210) of the rotary encoder (200).

9. A method for assembling a rotary encoder (200), the rotary encoder (200) comprising a bearing housing (230; 430; 530) and a bearing configuration (290), the method comprising the steps of:
- affecting (s613; 623) the bearing housing (230; 430; 530) so that an internal diameter thereof is increased to an extent allowing insertion of the bearing configuration (290);
- inserting (s614; s624) the bearing configuration (290) into the bearing housing (230; 430; 530) to a predetermined axial position; and
- affecting (s615; 625) the bearing housing (230; 430; 530) so that the internal diameter thereof is reduced so as to fixedly secure the bearing configuration (290) in a pre-stressed state.

## Patentansprüche

1. Drehgeber (200), umfassend eine Lagerkonfiguration (290), ein Lagergehäuse (230; 430; 530) und einen Stator (260), wobei die Lagerkonfiguration eine Welle (210), eine Anzahl Lagereinheiten (220a, 220b) und einen Rotor (250) umfasst, wobei das Lagergehäuse (230; 430; 530) dazu angeordnet ist, die Lagerkonfiguration (290; 210, 220a, 220b, 240, 250) innen aufzunehmen, wenn sich das Lagergehäuse in einem verformten Zustand befindet, wobei in dem verformten Zustand ein Einsetzen und Positionieren der Lagerkonfiguration (290) aufgrund eines vergrößerten Innendurchmessers des Lagergehäuses (230; 430; 530) möglich ist und wobei das Lagergehäuse (230; 430; 530) dazu angeordnet ist, die aufgenommene Lagerkonfiguration (290) in einem vorgespannten Zustand fest in einem unverformter Zustand zu fixieren.

2. Drehgeber nach Anspruch 1, ferner umfassend ein Federelement (240), das an der Welle (210) zwischen einer ersten Lagereinheit (220a) und einer zweiten Lagereinheit (220b) angeordnet ist, um einen in einer axialen Richtung vorgespannten Zustand der ersten Lagereinheit (220a) und der zweiten Lagereinheit (220b) bereitzustellen.

3. Drehgeber nach Anspruch 1 oder 2, ferner umfassend mindestens eine Rippe (232), die innerhalb des Lagergehäuses (230) angeordnet ist, wobei die mindestens eine Rippe (232) dazu angeordnet ist, die aufgenommene Lagerkonfiguration (290) fest zu fixieren.

4. Drehgeber nach einem der Ansprüche 1-3, wobei das Lagergehäuse (230) dazu angeordnet ist, durch entsprechende Schubkräfte (F1) in einer Richtung radial nach innen beeinflusst zu werden, wodurch das Lagergehäuse (230) dazu angeordnet ist, in den verformten Zustand zu wechseln, wobei in dem verformten Zustand das Einsetzen der Lagerkonfiguration (290) in das Lagergehäuse (230) möglich ist.

5. Drehgeber nach Anspruch 1 oder 2, ferner umfassend mindestens ein Wandelement (431), das innerhalb des Lagergehäuses (430) angeordnet ist, wobei das mindestens eine Wandelement (431) dazu angeordnet ist, die aufgenommene Lagerkonfiguration (290) fest zu fixieren.

6. Drehgeber nach Anspruch 5, wobei das mindestens eine Wandelement mit einem Greifmittel (432) bereitgestellt ist, wobei das Greifmittel (432) dazu angeordnet ist, durch entsprechende Zugkräfte (F2) in einer Richtung radial nach außen beeinflusst zu werden, wodurch das Lagergehäuse (430) dazu angeordnet ist, in den verformten Zustand zu wechseln, wobei in dem verformten Zustand das Einsetzen der Lagerkonfiguration (290) in das Lagergehäuse (430) möglich ist.

7. Drehgeber nach Anspruch 1 oder 2, wobei das Lagergehäuse (530) einen Querschnitt in Form eines Polygons aufweist und wobei mindestens eine Außenoberfläche des Polygons mit einem Greifmittel (532) bereitgestellt ist, wobei das Greifmittel (532) dazu angeordnet ist, durch entsprechende Zugkräfte (F3) in einer Richtung radial nach außen beeinflusst zu werden, wodurch das Lagergehäuse (530) dazu angeordnet ist, in den verformten Zustand zu wechseln, wobei in dem verformten Zustand das Einsetzen der Lagerkonfiguration (290) in das Lagergehäuse (530) möglich ist.

8. Baugruppe (100), umfassend den Drehgeber (200) nach einem der Ansprüche 1-7, wobei die Baugruppe dazu angeordnet ist, mit einer Welle (210) des Drehgebers (200) verbunden zu sein.

9. Verfahren zum Zusammensetzen eines Drehgebers (200), der Drehgeber (200) umfassend ein Lagergehäuse (230; 430; 530) und eine Lagerkonfiguration (290), wobei das Verfahren die folgenden Schritte umfasst:
- Beeinflussen (s613; 623) des Lagergehäuses (230; 430; 530) so, dass ein Innendurchmesser dessen soweit vergrößert wird, dass ein Einsetzen der Lagerkonfiguration (290) möglich ist;
- Einsetzen (s614; s624) der Lagerkonfiguration (290) in das Lagergehäuse (230; 430; 530) bis zu einer vorbestimmten axialen Position; und
- Beeinflussen (s615; 625) des Lagergehäuses (230; 430; 530) so, dass dessen Innendurchmesser verringert wird, um die Lagerkonfiguration (290) in einem vorgespannten Zustand fest zu fixieren.

## Revendications

1. Encodeur rotatif (200) comprenant une configuration de palier (290), un boîtier de palier (230 ; 430 ; 530) et un stator (260), la configuration de palier comprenant un arbre (210), un certain nombre d'unités de palier (220a, 220b) et un rotor (250), le boîtier de palier (230 ; 430 ; 530) étant agencé pour recevoir la configuration de palier (290 ; 210, 220a, 220b, 240, 250) en interne lorsque le boîtier de palier est dans un état déformé, dans lequel état déformé l'insertion et le positionnement de la configuration de palier (290) sont possibles en raison d'un diamètre interne accru du boîtier de palier (230 ; 430 ; 530), et le boîtier de palier (230 ; 430 ; 530) étant agencé pour fixer de manière fixe la configuration de palier reçue (290) dans un état précontraint dans un état non déformé.

2. Encodeur rotatif selon la revendication 1, comprenant en outre un élément de ressort (240) qui est disposé sur l'arbre (210) entre une première unité de palier (220a) et une seconde unité de palier (220b) de manière à fournir un état précontraint de la première unité de palier (220a) et de la seconde unité de palier (220b) dans une direction axiale.

3. Encodeur rotatif selon la revendication 1 ou 2, comprenant en outre au moins une nervure (232) disposée à l'intérieur du boîtier de palier (230), l'au moins une nervure (232) étant disposée pour fixer de manière fixe la configuration de palier reçue (290).

4. Encodeur rotatif selon l'une quelconque des revendications 1 à 3, dans lequel le boîtier de palier (230) est agencé pour être affecté par des forces de poussée respectives (F1) dans une direction radiale vers l'intérieur, de sorte que le boîtier de palier (230) est agencé pour passer **à** l'état déformé, dans lequel état déformé l'insertion de la configuration de palier (290) dans le boîtier de palier (230) est possible.

5. Encodeur rotatif selon la revendication 1 ou 2, comprenant en outre au moins un élément de paroi (431) disposé **à** l'intérieur du boîtier de palier (430), dans lequel l'au moins un élément de paroi (431) est agencé pour fixer de manière fixe la configuration de palier reçue (290).

6. Encodeur rotatif selon la revendication 5, dans lequel l'au moins un élément de paroi est pourvu d'un moyen de préhension (432), lequel moyen de préhension (432) est agencé pour être affecté par des forces de traction respectives (F2) dans une direction radialement vers l'extérieur, de sorte que le boîtier de palier (430) est agencé pour passer à l'état déformé, dans lequel état déformé l'insertion de la configuration de palier (290) dans le boîtier de palier (430) est possible.

7. Encodeur rotatif selon la revendication 1 ou 2, dans lequel le boîtier de palier (530) a une section transversale en forme de polygone, et dans lequel au moins une surface extérieure du polygone est pourvue d'un moyen de préhension (532), lequel moyen de préhension (532) est agencé pour être affecté par des forces de traction respectives (F3) dans une direction radialement vers l'extérieur, de sorte que le boîtier de palier (530) est agencé pour passer à l'état déformé, dans lequel état déformé l'insertion de la configuration de palier (290) dans le boîtier de palier (530) est possible.

8. Ensemble (100) comprenant l'encodeur rotatif (200) selon l'une quelconque des revendications 1 à 7, l'ensemble étant agencé pour être relié à un arbre (210) de l'encodeur rotatif (200).

9. Procédé d'assemblage d'un encodeur rotatif (200), l'encodeur rotatif (200) comprenant un boîtier de palier (230 ; 430 ; 530) et une configuration de palier (290), le procédé comprenant les étapes consistant à :
- affecter (s613 ; 623) le boîtier de palier (230 ; 430 ; 530) de sorte qu'un diamètre interne de celui-ci soit augmenté dans une mesure permettant l'insertion de la configuration de palier (290) ;
- insérer (s614 ; s624) la configuration de palier (290) dans le boîtier de palier (230 ; 430 ; 530) dans une position axiale prédéterminée ; et
- affecter (s615 ; 625) le boîtier de palier (230 ; 430 ; 530) de sorte que son diamètre interne soit réduit de manière à fixer de manière fixe la configuration de palier (290) dans un état précontraint.
